Europäisches Patentamt

European Patent Office

Office européen des brevets

(19)

(11) EP 0 459 208 B1

(12) EUROPEAN PATENT SPECIFICATION

(45) Date of publication and mention
of the grant of the patent:
15.07.1998 Bulletin 1998/29

(51) Int Cl.⁶: **C08J 3/22**, C08L 23/02

(21) Application number: 91107764.2

(22) Date of filing: 14.05.1991

(54) **Nonextruded concentrates of additives, fillers or pigments**

Nichtextrudierte Konzentrate aus Zusatzmitteln, Füllstoffen oder Pigmenten

Concentrés non extrudés d'additifs, de charges ou de pigments

(84) Designated Contracting States:
**AT BE DE ES FR GB IT NL SE**

(30) Priority: **14.05.1990 IT 2028890**

(43) Date of publication of application:
**04.12.1991 Bulletin 1991/49**

(73) Proprietor: **MONTELL NORTH AMERICA INC.**
**New Castle County Delaware (US)**

(72) Inventors:
• **Barbi, Giampaolo**
**I-44100 Ferrara (IT)**

• **Costantini, Enrico**
**I-40137 Bologna (IT)**

(74) Representative: **Zumstein, Fritz, Dr. et al**
**Dr. F. Zumstein**
**Dipl.-Ing. F. Klingseisen**
**Bräuhausstrasse 4**
**80331 München (DE)**

(56) References cited:
**EP-A- 0 197 631      EP-A- 0 290 149**
**DE-A- 2 504 363      GB-A- 863 732**
**US-A- 3 432 462**

**Description**

The present invention concerns concentrates of additives, pigments, or fillers, or combinations thereof, which can be used in processing olefin polymers. It is known that in order to obtain better dispersion of additives, pigments and fillers in the finished polymeric products, and optimize the properties imparted to said finished products, it is preferable, and sometimes necessary, to add the additives, pigments and fillers to the polymer in form of suitably prepared concentrates.

Said concentrates are generally obtained by dispersing high concentrations of the additives, pigments and fillers in materials which are compatible with the polymer materials constituting the finished products. In order to obtain the best usage economy, the concentrates should contain the highest possible quantity of additive (in the present description this term will be used to indicate generically additives, pigments, fillers or combination thereof, except for cases where the above mentioned distinction is explicit) while allowing an effective dispersion of the additive to be reached when said concentrates are diluted in polymer materials to obtain the finished products. For this purpose, the solution most commonly used in the art consists of coextruding the additive with a polymer compatible with the polymer materials which constitute the finished product, thus obtaining a concentrate in the form of pellets.

Said pellets are prepared in such a way that they can be used directly in the polymer processing plants.

On the other hand, in the field of olefin polymerization are taking hold, at the present time, some processes by which one can produce polymer particles in regular form, particularly spheroidal ones, and with a controlled particle size distribution.

Said polymer particles, because of their high flowability and absence of fines, can be used directly in the polymer processing plants and represent an economical alternative to the use of pellets. Further single screw extruders are not designed to handle liquid or low melting additives. Above a concentration of 5-7 weight % of an additive a screw slipping occurs, which leads to a variable quality and a low yield in extruder production.

Moreover, one must remember that extrusion often leads to degradation, and therefore loss, of some of the additive used in preparing concentrates. Therefore, the need for additive concentrates obtained directly from the above mentioned polymer particles, thus eliminating the extrusion stage, is strongly felt.

In EP-A-0 290 149 olefin polymer particles are disclosed having a porosity of at least 0.2 cm$^3$/g, preferably at least 0.25 cm$^3$/g, measured by the standard mercury porosimetry method, and capable of absorbing between 20 and 35% by weight based on the weight of the total material of a liquid additive.

In EP-A-0 197 631 concentrates of microbiocides are disclosed, obtained by causing thermoplastic polymer particles with a porosity being typically between 30 and 70% on a void volume basis to absorb said microbiocides in liquid state in an amount of 1 to 80% by weight of the thermoplastic. Also in this case the porosity is measured by standard mercury absorption.

US-3 432 462 is directed to a process for uniformly incorporating small amounts of additives (no more than 0.4% by weight in the examples) in porous polypropylene.

This invention provides some concentrates which are directly obtained from said nonextruded polymer particles and which have the necessary and desirable properties for a concentrate, in particular:

1) high additive content;
2) ability of producing good dispersion of the additives when the concentrates are diluted in the polymer to be processed;
3) possibility of being used directly in the polymer transformation plants;
4) good storage stability and resistance to damage during transport.

Further, since there is no need for extrusion, the concentrate of this invention is lower in crystallinity and has a lower heat of fusion so that it melts at lower temperature than comparable extrusion made polymer concentrates. This is believed to aid dispersion when let down in the polymer to be processed.

The object of the present invention, therefore, is to obtain a concentrate of one or more additives, pigments, or fillers, or combination thereof, to be used in the processing of olefin polymers or copolymers, said concentrate being in the form of nonextruded particles, each comprising:

A) a matrix consisting of a spherical nonextruded particle of an olefin polymer or copolymer, having a porosity, expressed as percentage of voids on the volume of the particle, higher than 18% measured by mercury porosimetry at a pressure of up to 0.25 MPa (2.5 kg/cm$^2$),

B) at least one additive, pigment or filler, or combinations thereof, deposited on the surface of the matrix (A) and/or inside its pores in an amount of from 5 to 50% by weight based on the total weight of the concentrate.

Nonextruded particles of olefin polymers and copolymers having a porosity, expressed in percentage of voids, higher than 18%, which form the above matrixes (A), are marketed by HIMONT ITALIA S.r.l.. Nonextruded particles as used herein means as-polymerized or unprocessed particles.

Particularly adequate to the preparation of the concentrates of this Invention are spherical particles having a porosity between 18% and 40%, generally between 18 and 29%, for example between 20 and 28% for example.

The olefin polymers which make up the particles are selected preferably between crystalline homopolymers of $C_3$-$C_{10}$ alpha olefins, in particular polypropylene with an isotactic index higher than 90, polyethylene and crystalline copolymers of propylene with ethylene and /or one $CH_2=CHR$ olefin, were R is an alkyl radical with 2-3 carbon atoms, containing more than 85% by weight of propylene. Preferably, the spherical particles made from the above mentioned olefin polymers have a surface area (B.E.T.) between 10 and 20 $m^2/g$, and an average diameter between 50 and 7000 microns, while the pore volume distribution is such that more than 90% of the pores have a diameter greater than $10,000 \cdot 10^{-10}$ m (10,000 Å).

The terms "additives", "fillers", and "pigments" are used in the art to indicate the substances which are added to polymers during their processing.

The term "additive" in particular, usually includes the categories of substances listed below.

1) Stabilizers.

Examples of stabilizers are:

A) antiacids, such as stearates, carbonates, and synthetic hydrotalcite for instance;
B) light stabilizers, for example "UV absorbers", such as benzophenones, benzotriazoles, carbon black; "quenchers", generally selected among Ni organic complexes; HALS (Hindered Amine Light Stabilizers);
C) antioxidants, for example phenols, phosphites, phosphonites, and compounds which are synergistic with antioxidants, such as thioesters or thioethers;
D) thermal stabilizers.

2) Processing coadjuvants and modifiers.

Examples of the above mentioned additives are:

E) nucleating agents, for example dibenzylidene sorbitol, carboxylic organic acids and their salts, such as adipic and benzoic acid, sodium benzoate and adipate;
F) "slip agents", such as erucamide and oleamide for example;
G) "antiblocking" agents, such as $SiO_2$ and synthetic zeolites;
H) lubricant and antistatic agents (for example glyceryl monostearate, waxes and paraffin oils and ethoxylated amines), mold release additives and flow enhancers;
I) molecular weight and rheology modifiers, such as peroxides;
J) coupling agents;
K) silicone oils and other silicon based additives;
L) flame retardants and ignition resistant additives;
M) blowing agents;
N) plasticizers;
O) anti-fogging agents;
P) biocidal agents.

The fillers include, for example, talc, carbonates, and micas. The pigments include organic and inorganic substances, such as carbon black, $TiO_2$, chromium oxides, phthalocyanines. Dyes are also within the broadest ambit of this invention.

For certain applications it may be desirable to make concentrates containing combinations of the above mentioned additives, fillers, and pigments, such as combinations of various stabilizers, or of fillers and pigments.

Depending on the physical state of the substances which are used as additives, pigments or fillers, one can use different variations in the preparation process of the concentrates.

If one uses liquid substances at room temperature, they can be added as such or with adequate diluents to the polymer particle matrix of the concentrates.

If one uses substances which melt at temperatures lower than the softening point of the polymer which makes up the matrix of the concentrates, said substances can be added in the molten state.

It is preferable to use materials which are liquid or when melted have a viscosity lower than 1 Pas (10 P). If the substances which constitute the additive, fillers, or pigments are solid, and they have a high melting point, said substances can be added in powder form to the polymer particles form using liquid wetting and surface-active agents, such as paraffin oils and liquid ethoxylated amines in order to obtain a good adhesion. It is preferable to use powders with a particle-size lower than 10 μm.

In any case, the concentrates of the present invention can be prepared very simply, by feeding the matrix polymer particles and at least one additive, pigment, fillers or combinations thereof, in normal mixers for powders, and mixing for the desired residence time.

The preferred mixers are those having a velocity from about 150 rpm (for mixers with an internal volumes of about 130 liters), up to 500 rpm (for mixers with a smaller internal volume of up to about 10 liters) which are thermoregulated. The use of thermoregulated mixers is particularly recommended in order to optimize and control the viscosity of the liquids and the meltable substances.

Normally, in order to obtain the concentrates of the present invention with the best results, residence times in the mixers of a few minutes are sufficient.

The preparation of the concentrates can be continuous or discontinuous.

The mixers are equipped with spray-feeders for the liquids, and hopper-feeders for the solids. The substances which can be fed in the molten state are normally melted in autoclaves under nitrogen.

When operating according to the above mentioned methods, one can obtain concentrations of additives, pigments, or fillers, or combinations thereof, up to 20%-30% by weight with respect to the total weight of the concentrate. Obviously, said maximum values are not absolute, since when operating, for instance, with fillers having a high specific gravity, one can reach concentrations around 50% by weight. The minimum concentration value is a function of the additives, fillers, or pigments (or combinations thereof) which are used, and of the concentration of same which one wants to obtain in the final products. In some cases it is possible to go down to a concentration of 5% by weight with respect to the total weight of the concentrate.

The optimal concentration values are, indicatively, from 10% to 30% by weight with respect to the total weight of the concentrate.

As mentioned above, the substances which are deposited on the polymer particles to obtain the concentrates of the present invention, result to be deposited on the particles themselves and/or in their pores.

With the processes described above it is possible to obtain concentrates with yields up to 100% with respect to the additives, fillers, or pigments used (or combinations thereof).

The following examples are given to illustrate and not limit the present invention.

The properties of the polymers and concentrates reported in the examples have been determined according to the following methods:

| | |
|---|---|
| - Isotactic index | Percentage by weight of polymer insoluble in xylene at room temperature (25°C) (corresponding basically to the %weight of polymer insoluble in boiling n-heptane). |
| - MIL (Melt Flow Index) | ASTM D 1238 condition L |
| - Surface area | B.E.T. (apparatus used SORPTOMATIC 1800 - C. Erba) |
| - Bulk density | DIN 53194 |

The porosity expressed as percentage of voids is determined through mercury absorption under pressure. The volume of mercury absorbed corresponds to the volume of the pores.

The instrument used, is a dilatometer with calibrated capillary (3 mm diameter) C D3 (C. Erba), connected to a mercury tank and a high vacuum rotary pump ($1 \times 10^{-2}$ mbar).

A weighted quantity of the sample (about 0.5 g) is introduced into the dilatometer. The apparatus is then brought under high vacuum (< 13.3 Pa (< 0.1 mm Hg)), and left to stand for about 10 minutes. The dilatometer is then connected to the mercury tank and the metal is slowly allowed to flow until it reaches a level marked on the capillary at the height of 10 cm. The valve which connects the dilatometer to the vacuum pump is turned off, and the apparatus is pressurized with nitrogen (0.25 MPa (2.5 kg/cm$^2$)). Due to the pressure, the mercury penetrates the pores and the greater the porosity of the material the more the mercury level decreases. Once the measure in the capillary, where a new level of mercury has stabilized, is determined, the volume of the pores is calculated as follows: $V = R^2 \pi \cdot \Delta H$, where R is the radius of the capillary in cm; $\Delta H$ is the difference in levels in cm between the initial and final levels of the mercury column.

The volume of the sample is given by:

$$V1 = \frac{P1 - (P2 - P)}{D}$$

where

P is the sample weight in grams;

P1 is the dilatometer + mercury weight in grams;
P2 is the dilatometer + mercury + sample weigth in grams;
D is the density of the mercury (at 25°C = 13.546 (g/cm$^3$ (g/cc)). The porosity % is given by:

$$X = \frac{100 \cdot V}{V1}$$

In order to control the yield of the concentrate with respect to the additive fed, particularly when the latter is a solid, it is better to sieve the concentrate for 10 minutes with a 1 mm mesh screen. In this way the additive which has not deposited on the polymer particles of the matrix is removed.

## Example 1

7 kg of crystalline polypropylene particles (isotactic index = I.I. of about 97) having an average diameter of 2 mm., 25% porosity, 13 m$^2$/g surface area and 0.36 poured bulk density, are fed in a Henshel quick mixer thermoregulated at about 70°C, and maintained at 500 rpm for 3 minutes. 3 kg of Atmer 163 (ethoxy amine with the formula N,N' -bis (2-hydroxyethyl)alkyl($C_{13}$-$C_{15}$) amine) are then sprayed in the mixer at 70°C.

The Atmer 163 is an ethoxyamine which is used as an antistatic agent. After 5 minutes of mixing, a concentrate with 30% by weight of Atmer 163 ethoxyamine is obtained.

The yield with respect to the additive fed is 100%.

## Example 2

In a Lodige mixer thermoregulated at room temperature are introduced 18 kg of the same polymer as Example 1, and, in about 30 seconds, 2 kg of Luperox 101 (2,5-dimethyl-2,5-bis(tert-butyl peroxy)hexane).

The mixing velocity is 150 rpm. After 5 min the concentrate is discharged, and it is found to contain 20% by weight of Luperox 101 peroxide. The yield with respect to the additive fed is 100%.

The concentrate thus obtained is diluted to 0.3% by weight in crystalline polypropylene (I.I. 97%) having a MIL of 0.4 g/10 min., using a Henshel GEN/MEC Turbo 10 intensive mixer for powders. The mixture obtained in this manner is extruded in a twin screw extruder at 250°C (temperature of the melt) thus obtaining granules having the MIL equal to 10.1 g/10 min.

## Example 3

In a Lodige mixer thermoregulated at 70°C are fed 16 kg of propylene/ethylene random copolymer containing 2,2% by weight of ethylene and having a porosity of 23%, surface area of 10 m$^2$/g and poured bulk density of 0.37, and is maintained at 150 rpm for 5 min.

4 kg of Tinuvin 770 bis(2,2 6,6-tetramethyl-4-piperidyl) sebacate, are then fed at a temperature of about 80°C, said sebacate having been melted at 120°C beforehand. After 5 min. the mixer is cooled, and the concentrate is discharged. The concentrate contains 20% by weight of the sebacate. The yield with respect to the additive fed is 100%.

The concentrate thus obtained is diluted, in a mixer for powders, to 2% by weight with crystalline polypropylene (I.I. 97) having a MIL of 1.8 g/10 min. The resulting mixture is then made into film with a Plasticizer MK II LAB Extrusion Line, and films of 60 μm in thickness is obtained.

The films are submitted to light ageing in an Atlas weatherometer C 65, together with films obtained by the same methods, but where the crystalline polypropylene has been additivated with a concentrate formed by extrusion. The extruded concentrate was prepared by extrusion with a twin-screw extruder at 220°C using a mixture of Tinuvin 770 sebacate and the same polymer as used for the nonextruded concentrate, in amounts such that the resulting extruded concentrate contains the same concentration of Tinuvin 770 as sebacate in the nonextruded concentrate.

The conditions used for the weatherometer test are the following: quartz/boron silicate filter; temperature black panel = 63°C; light cycle, dry-rain cycle 102-18 min.; humidity 60%.

Under such conditions the mechanical properties (tensile strength and elongation at break) for both types of film were reduced by 50% after 1000 hours.

## Example 4

In a Lodige mixer thermoregulated at 70°C are fed 17.65 kg of polypropylene in spherical particle form having the same characteristics of the polypropylene of example 1, but with a porosity of 29%, and maintained at 150 for 5 min.

Thereafter 1850 g of a liquid mixture of stabilizers maintained at a temperature of 120°C are fed into the mixer.

The mixture has been prepared separately by mixing:

500 g of Irganox 1010
250 g of Irganox 1076
600 g of Sandostab P-EPQ
50 g of parafin oil OB55/AT (ROL)

After 4 min. from the end of the additivation 500 g of calcium stearate are fed, it is maintained in agitation for 10 min., and the concentrate thus obtained is then discharged. Said concentrate has a total concentration of additives equal to 11.75% by weight.

The Irganox 1010 and 1076 are phenolic antioxidants sold by CIBA GEIGY and have, respectively, the formulas pentaerythritol-tetra[3-(3,5-di-tert-butyl-4-hydroxyphenyl)propionate] and octadecyl 3-(3,5-di-tert-butyl-4-hydroxyphenyl)propionate.

The Sandostab P-EPQ product is sold by SANDOZ and mainly consists of a phosphonite having the formula tetra-(2,5 di-tert-butyl phenyl)-4,4-diphenylenediphosphonite.

Example 5

In a Henshel mixer thermoregulated at 70°C are fed 8.75 kg of polymer particles as in Example 4 and kept under agitation for 5 minutes.

250 g of Atmer 163 ethoxyamine (used in this case as a wetting agent) and, 2 minutes later, 1 kg of Millard 3905 dibenzylidene sorbitol produced by MILLIKEN are then fed in.

After 5 minutes of agitation at 70°-80°C the concentrate thus obtained is discharged. After sieving, the additive content is 9.5% by weight. The yield with respect to the additive fed is 95%.

Using a mixer for powders, the above concentrate is diluted to 5% by weight in a propylene-ethylene random copolymer, containing 2.5% of ethylene, and having a crystallization temperature (DSC) of 98°C.

By pressure injecting the mixture thus obtained, some 1 mm thick plaques were obtained. The resulting crystallization temperature is 110.7°C.

Using the same method, but diluting an extruded concentrate of dibenzylidene sorbitol a crystallization temperature of 110.3°C is obtained.

Example 6

Using procedure and ingredients of Example 5, except using 15.5 kg of polymer particles, 500 g of paraffin oil OB 55/AT as wetting agent and 4 kg of IMI/L (IMI) talc instead of the dibenzylidene sorbitol.

The resulting concentrate contains 16% by weight talc, with a yield of 80% after sieving.

Example 7

The procedure and ingredients of Example 5 are used, except using 8.75 kg of polymer particles, 1 kg of Sicotan K 211 1(BASF) cadmium yellow instead of the dibenzylidene sorbitol, and 250 g of Atmer 163 ethoxyamine as a wetting agent.

The resulting concentrate contains 10% by weight of pigment, with a yield of 100% after sieving.

Example 8

The procedure ans ingredients of Example 7 are used, except using a Sandorin 2 GLS phthalocyanine based organic pigment.

A concentrate with 9.5% by weight of pigment is obtained, with a yield of about 90% after sieving.

In all the examples the nonextruded concentrates obtained are in spherical particle form, having a dry appearance and a flowability between 9 and 12 seconds.

The flowability is determined by the time that it takes 100 g of polymer to flow through a funnel whose output hole has a diameter of 9.5 mm, and the walls are inclined at 20°C on the vertical.

Claims

1. A concentrate of at least one additive, pigment or filler, or combinations thereof, to be used in the processing of polymers or copolymers of olefins, said concentrate being in the form of nonextruded particles, each particle comprising:

A) a matrix consisting of a spherical nonextruded particle of an olefin polymer or copolymer having a porosity, higher than 18%, expressed in percentage of voids on the volume of the particle, measured by mercury porosimetry at a pressure of up to 0.25 MPa (2.5 kg/cm$^2$),

B) in an amount of from 5% to 50% by weight based on the total weight of the concentrate of at least one additive, pigment or filler, or combinations thereof, deposited on the surface of the matrix (A) and/or inside its pores.

2. The concentrate of claim 1, wherein the matrix (A) is a spherical particle having a porosity between 15% and 40%.

3. The concentrate of claims 1 and 2, wherein the polymer which makes up the matrix (A) is selected from crystalline polypropylene, polyethylene or crystalline copolymers of propylene with ethylene and/or a $CH_2$=CHR olefin where R is an alkyl radical with 2-8 carbon atoms, containing over 85% by weight of propylene.

4. The concentrate of claim 1, wherein the content of (B) is from 10% to 30% by weight based on the total weight of the concentrate.

5. The concentrate of claim 1 or 2, wherein the additives are selected from stabilizers, processing coadjuvants and modifiers.

6. The concentrate of claim 5, wherein the stabilizers are selected from antiacids, light stabilizers or antioxidants.

7. The concentrate of claim 5, wherein the processing coadjuvants and modifiers are selected from nucleating agents; slip agents; antiblocking agents; lubricant and antistatic agents; molecular weight and rheology modifiers; coupling agents; silicone oils and other silicon based additives; flame retardants and ignition resistant additives; blowing agents, plasticizers; antifogging agents; and biocidal agents.

8. Use of the concentrates according to anyone of claims 1 to 7 in the processing of olefin polymers and copolymers.


**Patentansprüche**

1. Konzentrat zumindest eines Additivs, Pigments oder Füllstoffs oder von Kombinationen hiervon für die Verwendung bei der Verarbeitung von Polymeren oder Copolymeren von Olefinen, wobei das Konzentrat in Form von nichtextrudierten Teilchen vorliegt, bei denen jedes Teilchen umfaßt:

A) eine Matrix, bestehend aus einem sphärischen, nichtextrudierten Teilchen eines Olefinpolymeren oder -copolymeren mit einer Porosität von höher als 18%, ausgedrückt in Prozentanteil Hohlraum, bezogen auf Volumen des Teilchens, gemessen durch Quecksilberporosimetrie bei einem Druck von bis zu 0,25 MPa (2,5 kg/cm$^2$),

B) in einer Menge von 5 bis 50 Gew.%, bezogen auf das Gesamtgewicht des Konzentrats, zumindest ein Additiv, Pigment oder Füllstoff oder Kombinationen hiervon, abgeschieden auf der Oberfläche der Matrix (A) und/oder im Inneren ihrer Poren.

2. Konzentrat gemäß Anspruch 1, worin die Matrix (A) ein sphärisches Teilchen mit einer Porosität zwischen 18 und 40% ist.

3. Konzentrat gemäß den Ansprüchen 1 und 2, worin das Polymere, das die Matrix (A) bildet, unter kristallinem Polypropylen, Polyethylen oder kristallinen Copolymeren von Propylen mit Ethylen und/oder einem Olefin $CH_2$=CHR, worin R einen Alkylrest mit 2 bis 8 Kohlenstoffatomen bedeutet, welche mehr als 85 Gew.% Propylen enthalten, ausgewählt ist.

4. Konzentrat gemäß Anspruch 1, worin der Gehalt an (B) 10 bis 30 Gew.%, bezogen auf das Gesamtgewicht des Konzentrats, beträgt.

5. Konzentrat gemäß Anspruch 1 oder 2, worin die Additive unter Stabilisatoren, Verarbeitungs-Coadjuvantien und Modifizierungsmitteln ausgewählt sind.

6. Konzentrat gemäß Anspruch 5, worin die Stabilisatoren unter Antisäuren, Lichtstabilisatoren oder Antioxidantien ausgewählt sind.

7. Konzentrat gemäß Anspruch 5, worin die Verarbeitungs-Coadjuvantien und Modifizierungsmittel unter Nukleierungsmitteln; Gleitmitteln; Antiblockiermitteln; Schmiermitteln und antistatischen Mitteln; Modifizierungsmitteln für das Mole. kulargewicht und die Rheologie; Kupplungsmitteln; Siliconölen und anderen Additiven auf Siliconbasis; Flammverzögerern und entzündungshemmenden Additiven; Treibmitteln, Weichmachern; Mittel gegen die Beschlagbildung; und bioziden Mitteln ausgewählt werden.

8. Verwendung der Konzentrate gemäß einem der Ansprüche 1 bis 7 bei der Verarbeitung von Olefinpolymeren und -copolymeren.

**Revendications**

1. Un concentré d'au moins un additif, pigment ou charge, ou leurs combinaisons, destiné au traitement de polymères ou copolymères d'oléfines: ledit concentré étant sous forme de particules non-extrudées, chacune des particules comprenant:

A) une matrice consistant en particule non-extrudée sphérique d'un polymère ou copolymère d'oléfine ayant une porosité supérieure à 18%, exprimée en pourcentage de vide par rapport au volume de la particule, mesurée par porosimétrie au mercure, sous une pression pouvant atteindre 0.25MPa (2.5kg/cm$^2$),
B) à raison de 5% à 50% en poids, exprimé par rapport au poids total de concentré, d'au moins un additif, pigment ou charge, ou de leurs combinaisons, déposé sur la surface de la matrice (A) et/ou à l'intérieur de ses pores.

2. Le concentré selon la revendication 1, dans lequel la matrice (A) est une particule sphérique ayant une porosité comprise entre 18% et 40%.

3. Le concentré selon les revendications 1 ou 2, dans lequel le polymère qui constitue la matrice (A) est choisi parmi le polypropylène ou le polyéthylène cristallins ou les copolymères cristallins de propylène et d'éthylène et/ou d'une oléfine $CH_2=CHR$, où R est un radical alkyle comprenant 2 à 8 atomes de carbone, contenant plus de 85% en poids de propylène.

4. Le concentré selon la revendication 1, dans lequel la teneur en (B) est comprise entre 10% et 30% en poids par rapport au poids total du concentré.

5. Le concentré selon la revendication 1 ou 2, dans lequel les additifs sont choisis parmi stabilisants, coadjuvants de traitement et agents de modification.

6. Le concentré selon la revendication 5, dans lequel les stabilisants sont choisis parmi anti-acides, stabilisants vis-à-vis de la lumière ou les anti-oxydants.

7. Le concentré selon la revendication 5, dans lequel les coadjuvants de traitement et les agents de modification sont choisis parmi; agents nucléants; agents lubrifiants; agents antibloquants; lubrifiants et agents antistatiques; modificateurs de poids moléculaire et de rhéologie; agents de couplagge; des huiles siliconées et autres additifs à base de silicium; agents ignifuges et anti-inflammation; agents soufflants, plastifiants; agents anti-voile, agents biocides.

8. Utilisation de concentrés selon l'une quelconque des revendications 1 à 7, pour le traitement de polymères et de copolymères d'oléfines.